# EUROPEAN PATENT SPECIFICATION

(11) **EP 2 381 094 B1**
(45) Date of publication and mention of the grant of the patent: **14.08.2013**
(21) Application number: 10164498.7
(22) Date of filing: 31.05.2010
(51) Int. Cl.: F03D 7/00, H02J 3/38

(54) **Energy network and control thereof**
Energienetzwerk und Steuerung davon
Réseau d'énergie et son contrôle

(30) Priority: 20.04.2010 US 325984 P
(43) Date of publication of application: 26.10.2011
(73) Proprietor: ABB Research Ltd., 8050 Zürich (CH)
(72) Inventor: Franke, Carsten, 5608 Stetten (CH); Timbus, Adrian, 5405 Baden-Dättwil (CH); Larsson, Mats, 5405 Baden-Dättwil (CH); Brandwajn, Vladimir, San Mateo, CA US-94403 (US)
(74) Representative: ABB Patent Attorneys

(56) References cited:
- DOWRUENG A ET AL: "Decentralised Energy Management System with comprehension of fluctuated renewable energy resources", CLEAN ELECTRICAL POWER, 2009 INTERNATIONAL CONFERENCE ON, IEEE, PISCATAWAY, NJ, USA, 9 June 2009 (2009-06-09), pages 316-319, XP031517632, ISBN: 978-1-4244-2543-3
- MITCHELL K ET AL: "Simulation and optimisation of renewable energy systems", INTERNATIONAL JOURNAL OF ELECTRICAL POWER & ENERGY SYSTEMS, JORDAN HILL, OXFORD, GB, vol. 27, no. 3, 1 March 2005 (2005-03-01), pages 177-188, XP025279557, ISSN: 0142-0615, DOI: DOI:10.1016/J.IJEPES.2004.10.001 [retrieved on 2005-03-01]
- ERNST B ET AL: "Wind power and photovoltaic prediction tools for balancing and grid operation", INTEGRATION OF WIDE-SCALE RENEWABLE RESOURCES INTO THE POWER DELIVERY SYSTEM, 2009 CIGRE/IEEE PES JOINT SYMPOSIUM, IEEE, PISCATAWAY, NJ, USA, 29 July 2009 (2009-07-29), pages 1-9, XP031516901, ISBN: 978-1-4244-4860-9
- ANDERSON C L ET AL: "Analysis of wind penetration and network reliability through Monte Carlo simulation", WINTER SIMULATION CONFERENCE (WSC), PROCEEDINGS OF THE 2009, IEEE, PISCATAWAY, NJ, USA, 13 December 2009 (2009-12-13), pages 1503-1510, XP031647454, ISBN: 978-1-4244-5770-0
- VILLAFAFILA R ET AL: "Probabilistic assessment of wind power production on voltage profile in distribution networks", ELECTRICAL POWER QUALITY AND UTILISATION, 2007. EPQU 2007. 9TH INTERNATIONAL CONFERENCE ON, IEEE, PISCATAWAY, NJ, USA, 9 October 2007 (2007-10-09), pages 1-5, XP031225949, ISBN: 978-84-690-9441-9
- ROSEN ET AL: "Model-based analysis of effects from large-scale wind power production", ENERGY, PERGAMON PRESS, OXFORD, GB, vol. 32, no. 4, 22 December 2006 (2006-12-22), pages 575-583, XP005812058, ISSN: 0360-5442, DOI: DOI:10.1016/J.ENERGY.2006.06.022

## Description

The present invention relates to an energy network and an associated method of control, in particular the invention relates to an energy network which includes an intermittent energy source generating plant such as a wind power generating plant.

Energy networks have traditionally relied on power grids which have predominantly been supplied with energy from fossil fuels and nuclear power. Such traditional energy sources fit comfortably with the need for responsive energy supply and thus the energy generation systems have been reasonably straightforward to both analyse and control. In such energy networks, it is common for contingency analysis to be used to facilitate the management of the system. Contingency analysis is typically used to analyse the impact of hypothetical disturbance conditions in the power grid of the energy network. The objective of such contingency analysis is to increase operator situational awareness and this is achieved by analyzing a large set of credible contingencies (N) and, from this analysis, identifying in real time a number of critical contingencies (n) that could create instability or overload in the power grid.

Dowreng A. et al in "Decentralised Energy Management System with comprehension of fluctuated renewable energy resources" (International Conference on Clean Electrical Power, 2009, IEEE, Piscataway, NJ, USA, 9 June 2009, pages 316-319, ISBN: 978-1-4244-2543-3) point out that, under integration of renewable energy resources, many still understand only proof procedures to connect new power plants to public grid. These leads to management systems that aim to observe electrical and thermal grid condition which makes that, in defined situations renewable power plants will be turned off. Another huge problem is the natural fluctuation of direct renewable energy converter such as photovoltaic and wind turbine. This paper shows a Decentralised Energy Management System comprising eight functional components: prognoses (wind, load), disposition, nodal load prediction, schedule planning, power system simulation, evaluation of simulation, model of decentralised power plants and online controller. Introductions on offline planning and online system are given.

In a comparative analysis, in the context of the invention, this paper discloses a method for controlling an energy network which includes at least one intermittent energy source generating plant, the method comprising: storing predetermined intermittent energy source generating plant state information; receiving intermittent energy source power generation information; determining possible intermittent energy source generating plant effects, from such state and generation information; determining credible effects from such possible effects; and controlling the energy network in dependence upon such credible effects.

Such a method for controlling an energy network which comprises fluctuated renewable energy resources and uses previous generation and consumer data (stored information), receives information about the renewable generation, and determines the effects that this renewable generation has in schedules. The schedules are evaluated by the dispatcher and "special events" second paragraph are compensated. The method makes use of a model, a "nodal load prediction module". The method also considers measured or forecast power generation or weather data.

The role played and experience gained through the use of a simulator of a renewable energy system, in both grid-connect and stand-alone modes is presented by Mitchell K et al. in "Simulation and optimisation of renewable energy systems" (International Journal of Electrical Power & Energy Systems, Jordan Hill, Oxford, GB, vol. 27, no. 3, 1 March 2005, pages 177-188, ISSN: 0142-0615). In this paper a system containing wind, solar, energy storage and stand-by plant is modelled. The simulator calculates energy flows on an hourly basis, using actual typical daily loading, wind and solar distributions in the western Sydney area. In stand-alone mode, the model shows the relationship between improving system availability and component rating and system storage. It also shows a rapid 'law of diminishing returns' effect, whereby the objective of complete energy independence would, although theoretically attainable, be prohibitively expensive in practice without some sort of stand-by plant. The model is also used to demonstrate the potential gains of using predictive procedures, based on seasonal averages of wind, solar and load, to optimise the scheduling of stand-by plant or in the case of grid connection, grid and interaction.

The integration of renewable energy sources into the electricity grid has become an important challenge for the utilization and control of electric power systems, because of the fluctuating and intermittent behaviour of mainly wind power and photovoltaic (PV) generation. To integrate these large amounts of fluctuating (intermittent) renewable energy sources into the grid accurate prediction systems are necessarily. Although the prediction is mainly used for balancing, other issues like the forecast of congestion, network losses, and the possible need for reserve power are growing more and more in the interest of the transmission system operators. All these aspects are discussed by Ernst B. et al in "Wind power and photovoltaic prediction tools for balancing and grid operation" (Integration of Wide-scale Renewable Resources into the Power Delivery

System, 2009 CIGRE/IEEE PES Joint Symposium, IEEE, Piscataway, NJ, USA, 29 July 2009, pages 1-9, ISBN: 978-1-4244-4860-9). Modern wind power and PV prediction systems commonly use numerical weather prediction model as input. One major step to enhance the forecast accuracy of the prediction is the combination of several weather models in order to exploit the fact that the models have strengths and weaknesses in different situations. On the basis of these single forecasts a combined power prediction is produced taking into account the characteristic behaviour of the different forecasts and renewable resources. Though the main use is the balancing, other issues like the forecast of congestion, network losses, and possible need for reserve power are of growing interest.

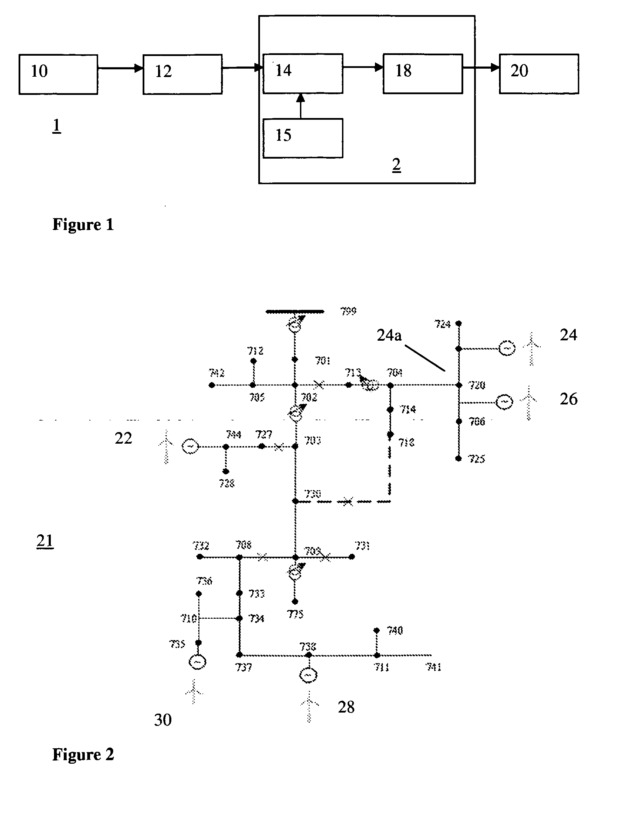

An example of a typical contingency analysis module 2 within a process system 1, which forms part of a traditional energy network (not shown), is shown in Figure 1. The Supervisory Control and Data Acquisition System 10 collects measurements and status indications from a power grid (not shown) and transmits them to the State and Topology Estimator 12. The Estimator 12 analyses the collected measurements and indications and computes a mathematical model which represents the actual state of the power grid in real time. The model and state are transmitted from the Estimator 12 to a Contingency Analysis Engine 14 which is a component of the Contingency Analysis module 2. A list 15 comprising a large number (N) of credible contingencies is also transmitted to the Analysis Engine 14. Using the data received from the Estimator 12 and list 15, the Engine 14 computes a severity index based on the current network state that has been modified through the application of each of the N credible contingencies, one by one. These computations are transmitted to the sorting and classification module 18 where they are ranked according to the severity index. From the ranked computations those having the most severe ranking are collated to form a small subset (n) of the contingencies, this subset is transmitted out of the contingency analysis module forming the worst contingencies output 20. These are often presented to an operator on a graphical user interface (GUI) (not shown).

Typically the worst contingencies subset n is in the in the order of tens and the full list of critical contingencies N has thousands, or tens of thousands of members. So that the process of contingency analysis can be completed in a reasonable time, it is typical that only single contingencies and a few combinations of two contingencies are studied.

In traditional energy generation systems the types of contingencies that are included in N are outages of single components such as power lines, generators or other pieces of equipment. Commonly, faults such as bus-bar faults can also be modelled; this involves the de-energization of the faulted bus-bar accompanied by the disconnection of all lines and generation units connected to the respective bus-bar. Although modelling of a contingency of this type relates to multiple components, it is still the modelling of a local effect originating in the substation where the faulty bus-bar is located.

The integration of natural, intermittent, energy sources such as wind power, solar, tidal or wave power, into the power grids of energy networks presents a new challenge in the management and control of energy networks. The main challenge is due to the intermittency of their power production which is dependent on meteorological phenomena such as wind speed, solar irradiance, etc. This intermittency means that power generated from renewable energy sources is relatively unreliable compared to traditional energy sources such as fossil fuels from which energy generation can be actively and accurately dispatched.

Examples of scenarios that can arise with wind generated power which are relevant to contingency analysis include severely strong winds occurring over a wide geographical area, a sudden weakening of wind over a large area and sudden wind increase over a wide geographical area.

When severely strong winds arise, the wind turbines affected have a built in self protection mechanism which disconnects them from the power grid to prevent them being damaged. If severely strong winds occur over a wide geographical area, for a sustained period of tens of minutes, this mass disconnection of wind turbines would result in the energy output from the energy generation system falling substantially and unable to meet the energy demand.

A change in the weather front over a geographical area can be accompanied by a suddenly weakened wind; this would result in a sudden drop in energy generation meaning the output from the energy generation system would perhaps not be sufficient to meet user demand.

A sudden wind increase over a wide area could also lead to a rapid increase in the wind power being generated; this in turn could overload the transmission lines in the vicinity of the wind generation unit. Within a few minutes, this will result in the disconnection of the line and if there is no other transfer path that can transport the energy produced by the wind generation, this will result in an indirect loss of the wind generation. If there are other paths, the energy will be transported on these other paths which similarly run the risk of overload and disconnection. In such scenarios, it is not uncommon for cascading line disconnections propagating into a wide-spread blackout.

A sudden disconnection of wind farms in the area of very low wind speeds is another issue which can arise. This occurs as at very low wind speeds, the wind farm creates higher loses due to the flowing reactive power. Thus, this effect is often not wanted. Such an incidence causes the loss of reactive power generation capability which many wind farms can deliver even if no wind is available. However, in some cases, the wind turbines are left online, during periods of low wind speed, in order to provide reactive power.

Such sudden drops in output from the energy generation system could reasonably result in power outages. Even if power outages were avoided, it could be the case that users would need to be disconnected on a rotating basis. Each of these situations results in inconvenience to users and potential loss of revenue to energy network operators.

Furthermore, wind generation is often provided by wind farms, or units, situated in different locations across the power grid. These wind farms will likely be subjected to the same weather factors, possibly with some time delays, thus they are affected by the disturbances in a coherent way. For example if a storm front first passes over a wind farm which disconnects, it is very likely that the same storm will move to other areas causing similar effect there. Such wind generation may lead to sudden increase of the production in the case of moderate wind bursts, sudden decrease of production in the case of sudden wind decrease or disconnection and total loss of production due to disconnection of wind farms in the case of very large wind speeds.

Therefore, the outages or disturbances of the wind generation components of an energy generation system are no longer uncorrelated, which is an assumption that forms the basis of the classical approach to contingency analysis. Because of this, the customary way of treating a generator as an individual unit in contingency analysis will lead to overly optimistic ranking of wind generation components.

Thus, to ensure that an energy generation system can be controlled effectively, it is important that contingency analysis reflects the coherent inconsistencies of power input from power generation sources such as wind turbines.

For contingency analysis, a forecast horizon of up to a few hours is of interest. Current forecasting tools can provide a relatively accurate assessment and forecast of the production of power from a wind generation component for such a forecast horizon. One such forecasting tool uses a two stage procedure where a numerical weather prediction service is first used to obtain wind forecasts. Models of wind turbines and wind farms, and information about their physical characteristics, are then combined with the wind forecasts and used to create corresponding power generation forecasts with associated confidence intervals and/or estimates of the statistical distribution of the production of a function of forecasted time. Typical forecast inaccuracies in percent of rated power are 3-5% for large groups of wind turbines and up to 10% for individual wind power turbines. The wind power forecast usually only provides the predicted power generation by the specified wind generation component in terms of the expected power output and the upper and lower confidence intervals. This is sufficient for the planning of wind power generation and can also be used for contingency analysis.

However, as existing contingency analysis modules can only process uncorrelated outages of single components in a power grid, disturbances such as those detailed above cannot be represented. Therefore energy networks which have input from an intermittent energy source cannot be controlled in an optimum manner.

An object of the present invention is to obviate or mitigate at least one of the aforementioned problems.

The invention is defined by a contingency analysis method with the steps in independent claim 1. Alternative features are described in the dependent claims.

Such a method of controlling an energy network enables efficient use of intermittent energy source power generation and can facilitate provision of effective contingency analysis.

It will be understood that the term energy network includes energy generation, energy transmission and energy distribution systems.

Preferably the state information for the generating plant is determined from power generation characteristics for the generating plant.

The intermittent energy source power generation information may be forecast information, measured information or a combination thereof.

By using power generation characteristics of the intermittent energy source generating plant, including measurements, forecasts or a combination thereof, a more accurate representation of the state information of the generating plant can be provided.

The use of geographical information or forecast information can provide more accurate contingency analysis reflecting issues arising as a result of shared geographical location or forecast issues.

The term "intermittent energy source" is taken to mean any natural renewable energy source, including but not limited to wind, wave or solar power, which due to the vagaries of nature are not consistent in the power they provide.

These and other aspects of the invention will become apparent from the following descriptions when taken in combination with the accompanying drawings in which:
Figure 1 shows a known contingency analysis module of a traditional energy transmission system;
Figure 2 shows a power grid, which includes wind power generating plants, of an energy network in which the present invention may operate;
Figure 3 shows a processing system of an energy network according to a first embodiment of the present invention; and
Figure 4 shows a graphical representation of a true and linearly approximated power curve of a wind generation plant of an energy network in which the present invention may operate.

With reference to Figure 2 there is shown a power grid 21 of an energy network, in this case an energy generation system, which includes intermittent energy source generating plants, in this case wind farms 22, 24, 26 28 and 30. As can be seen, each of these wind farms is spaced apart geographically and although not represented proportionally, each wind farm is of a different size from each of the other wind farms.

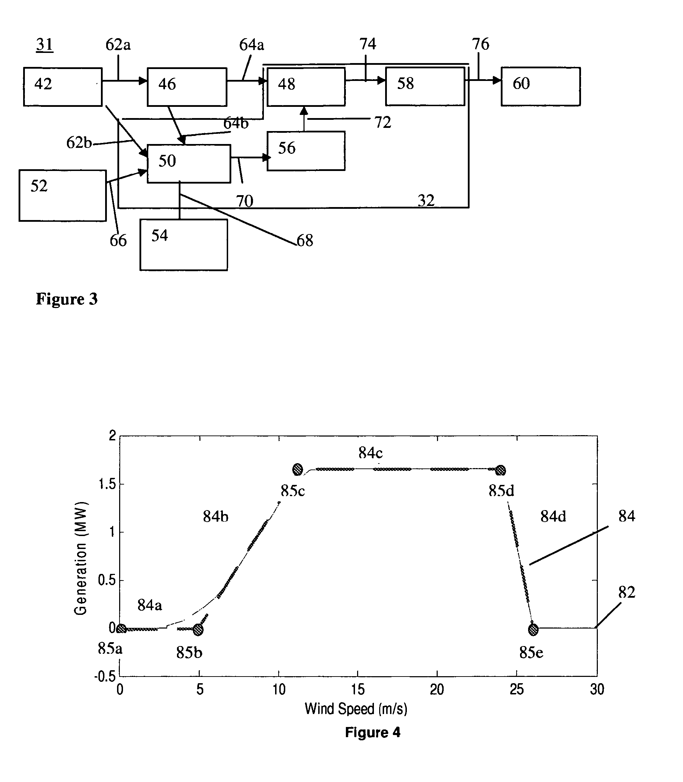

With reference to Figure 3 there is shown an intermittent energy source contingency analysis module 32 as part of a process system 31 for use with the power grid 21 of Figure 2. The process system 31 comprises a Supervisory Control and Data Acquisition System 42 which collects measurements and status indications from power grid 21. In this case the information collected is measurement of the power production from each of the farms 22 - 30 and the wind speed at each of the farms 22 - 30. This information is then transmitted 62a to the State and Topology Estimator 46, a small subset of the information flowing to the State Estimator 46 is also transmitted 62b to Wind Power Contingency Definition 50, the small subset of information corresponds to measurements related to wind power plants. The Estimator 46 analyses the collected measurements and indications and computes a mathematical model which represents the actual state of the power grid in real time. The model and state is transmitted 64a from the Estimator 46 to a Contingency Analysis Engine 48 which is a component of the Contingency Analysis module 32. The model and state is also transmitted 64b to Wind Power Contingency Definition 50. This transmission 64b is not mandatory and if enough measurements are available from the Supervisory Control and Data Acquisition System 42 then transmission 64b is not necessary. However, the transmission 64b is beneficial in all cases as the information provided by the State Estimator 46 may have a higher accuracy than just the measurements provided by the Supervisory Control and Data Acquisition System 42. The Wind Power Contingency Definition 50 is also provided a transmission 66 from the Wind Power Generation Forecast module 52. The Wind Power Generation Forecast module 52 typically provides expected values of production and the associated confidence interval. In addition, the Wind Power Contingency Definition 50 is also provided a transmission 68 from the Wind Forecast module 54. The Wind Forecast module 54 typically provides predictions of average expected wind speed for the forecast horizon of a few hours. The Wind Power Contingency Definition 50 is further provided with geographical information about the location of the wind farms 22-30 in the power grid 21. This geographical information comes from configuration data pre-programmed into the Wind Power Contingency Definition module 50 when it is commissioned for the specific power grid with which it is used. The Wind Power Contingency Definition 50 uses the received information to generate wind power contingency scenarios which represent the effect of large wind variations. These wind power contingency scenarios are transmitted 70 to be incorporated within list 56 of a large number (N) of credible contingencies. The list 56 is transmitted 72 to the Analysis Engine 48. Using the data received from the Estimator 46 and list 56, the Engine 48 computes a severity index based on the current network state for each of the N credible contingencies. These computations are transmitted 74 to the sorting and classification module 58 where they are ranked according to the severity index. From the ranked computations those having the most severe ranking are collated to form a small subset (n) of the contingencies, this subset is transmitted 76 out of the contingency analysis module forming the worst contingencies output 60.

With further reference to the Wind Power Contingency Definition 60, the provision data transmitted 66 from Wind Power Generation Forecast module 52 and data transmitted 58 from the Wind Forecast Module 54 provides data 70 which means the credible contingencies 56 can be filtered based on relevant wind power curve information such as that shown in Figure 4.

The power-curve graph of Figure 4 is for a wind turbine, which in this case could be any given a wind turbine in wind farm 22. The true power-curve 82 can be seen as a continuous curvilinear line. This true power curve 82 is linearly approximated as shown by the broken line 84. The power curve linear approximation 84 is parameterized by the five points referred to in Figure 4 as 85a, 85b, 85c, 85d and 85e which are used by the contingency analysis model 32. The power curve linear approximation 84 is therefore split into four components 84a, 84b, 84c and 84d which interconnect the parameterisation points 85a - e.

The four components 84a - d of the power curve linear approximation 84 correlate to four different modes of operation.

Component 84a defines a first operating mode which occurs when the wind speed is below the cut-in speed. The cut-in speed is the speed at which the wind turbine will be connected to the grid. Before reaching the cut in speed, the turbine is still rotating. However, the cut-in speed is chosen at the point where the turbine will act as a generator. Cut-in speed for power generation wind turbines is typically 3-5 m/s. During wind conditions of less than 3 - 5 m/s the turbine produces no active power and instead acts as a motor and thus consumes energy.

Component 84b defines a second operating mode which occurs when the wind speed is between the cut-in speed, typically 3 -5 m/s, and the minimum wind speed at which the turbine produces the rated active power, typically 11 - 13m/s. In this second operating mode 84b, the wind turbine produces active power which varies directly with the wind speed.

Component 84c defines a third operating mode which occurs when wind speeds are at a level for the wind turbine to consistently produce rated active power, such wind speeds are typically between 13m/s and 24m/s.

Component 84d defines a fourth operating mode which occurs when wind speeds are above the cut-out speed for the turbine. During such wind speed condition wind turbines will disconnect themselves from the grid, to prevent damage to the turbines, which results in a loss of active and reactive power being supplied to the grid.

It will understood that from the above, that a wind turbine is only likely to disconnect due to rapid wind changes if is operating in the second operating mode 84b or the fourth operating mode 84d. Furthermore, a wind turbine will only produce power at a highly variable rate if it is operating in the second mode of operation 84b.

Contingencies for the above operation modes are generated in real-time by the Wind Power Contingency Definition 50 based on the wind speed measurements transmitted 62b from SCADA 42, those transmitted 64b by the State Estimator 46, those transmitted 66 by the wind power forecast module 52 and those transmitted 68 by wind speed forecast module 54, all of which are input in parallel, on the basis set out in Table 1. However, useful contingencies can be generated by Wind Power Contingency Definition 50 based on the data received from inputs from wind power forecast module 52 and wind speed forecast module 54 plus at least one input from either SCADA 42 or State Estimator 46.

Table 1 outlines the principle of filtering out wind contingencies carried out by the Wind power contingency definition 50 based on the operating conditions of a wind turbine.

| **Operating Mode** | **Activate production increase contingency** | **Activate production decrease contingency** | **Activate wind unit outage contingency** |
|---|---|---|---|
| 1 (84a) | no | no | yes |
| 2 (84b) | yes | yes | no |
| 3 (84c) | no | no | no |
| 4 (84d) | no | no | yes |

The applicability of these contingencies can be more fully understood in context of how each operation mode impacts on the performance of the turbine. For example, when the turbine is operating in the first mode 84a it is not unusual for the turbine to be disconnected from the grid. For a wind farm, such as wind farm 22 in Figure 2 comprising a number of wind turbines, disconnection results in the loss of reactive power generation and thus, for each turbine, the loss of voltage control capability as each turbine experiences closely similar wind conditions. The variability of the active power production is low for turbines in the first mode 84a, but there is a risk of on-line wind turbines disconnecting which causes loss of reactive power generation capability. It is important for the contingency analysis process that these possibilities are taken into consideration as it may be necessary for a wind turbine outage contingency to be put into place should a first operation mode state 84abe predicted as likely to occur.

However, it should be noted that, in some cases connection to the power grid is maintained for turbines in the first operation mode state to reduce the risk of losing the reactive power production capability in this first operation mode. For turbines set up in this manner, this is another feature of operation which should be taken into account in the contingency analysis process in the system 31.

Whilst in the second operation mode 84b, there is low risk that the wind turbine will disconnect due to wind variations as it is unlikely that the winds speed will fall to a low enough level for disconnection to be triggered. In this second mode of operation, as the power will vary substantially as the wind power which the turbine is exposed to varies, the wind power contingency definition 50 of the contingency analysis module 32 shall model the amount of wind power variation In these circumstances it may be necessary for an "activate production increase contingency" and an "activate production decrease contingency" both to be generated if a second operation mode state be predicted as likely to occur and these will both be added to the data 70 transmitted to list 56.

Whilst a wind turbine is in this third operating mode 84c, the contingency analysis filtering process in wind power contingency definition 50 does not need to consider the effect of wind speed. Thus, output 70 from the wind power contingency definition 50 will not contain critical contingencies reflecting the likely wind power variation in the third operation mode. This is because whilst operating in the third mode 84c, the turbine poses no potential danger for the electrical network as the power produced by wind turbines is substantially constant during a large variety of wind speeds which fall within the range expected during the third operation mode 84c. The third mode of operation 84c is the optimal operating mode for the wind turbine and whilst operating in this mode, the power output from the turbine is constant and independent of the wind speed within the given range for this operating mode.

However, in the fourth operation mode 84d, the potential loss of active and reactive power, due to the turbine disconnecting, means this is an important scenario for incorporation into the contingency analysis process at wind power contingency module 50. Therefore, a wind turbine outage contingency should be put into place if a fourth operation mode state 84d is predicted as likely to occur.

In the above operation mode scenarios, the wind unit outage contingencies considered relate only to power outages caused by changes in the wind. If the wind turbine has been added to the working contingency list 56 as a regular generator outage, it will still be simulated as an outage, no matter of the settings in the table above, in line with traditional contingency analysis practices with the wind farm being considered as a "normal" generator. This contingency is included if it is the case that the energy system would go into a critical state if the wind farm failed as it make sense to simulate the outage of the wind farm regardless of the wind speeds or other parameters. However, in the case that the general and the wind related outage was selected from the working contingency list 56, the contingency analysis module 32 only executes the simulation of an outage of the whole unit once.

This contingency analysis method can be put in context with reference to the power grid 21 of Figure 2. The wind farms 22 - 30 are operating in the operation modes shown in Table 2 below:

| **Wind Farm** | **Operating Region** | **Activate production increase contingency** | **Activate production decrease contingency** | **Activate wind unit outage contingency** | **Effects on** |
|---|---|---|---|---|---|
| 22 | 1 (84a) | No | No | Yes | Reactive power |
| 24 | 2 (84b) | Yes | Yes | No | Active and reactive power |
| 26 | 3 (84c) | No | No | No | - |
| 28 | 4 (84d) | No | No | Yes | Active and reactive power |
| 30 | 2 (84b) | Yes | Yes | No | Active and reactive power |

The contingency information generated in relation to each of the operation modes 84a - d is also set out in Table 2 along with the impact such generated contingencies will have on power production.

As can be seen from Table 2, the contingencies defined provide a precise indication of the potential issues which could arise at each of the wind farms 22 - 30 as a result of the predicted weather. In particular, in this case, the contingency analysis filtering process in wind power contingency definition 50 determines the effect of a loss of reactive power for wind farm 22, the effect of a loss of active and reactive power for wind farm 28, and the variations in active and reactive power for wind farms 24 and 30. No contingency is generated based on the wind power forecast for wind unit 28 as it is predicted to be in a third operation mode state 84c. When the contingency analysis data illustrated in Table 2 is considered in comparison to data which would typically be generated by prior art systems, the richness of detail in the generated contingencies is more clearly understood as existing contingency analysis methods would only have analysed, as a whole, the outages of all the wind farms 22 - 30.

By incorporating the real time and/or forecast operating conditions of a wind farm 22 in data transmitted 64a into the analysis engine 48 and data transmitted 62b, 64b, 66, 68 into the wind power contingency definition 50, the analysis engine 48 is better able to filter out the non-relevant contingencies related to wind power production turbines. This leads to a higher quality of the contingency analysis performed by the analysis engine 48 as it can clearly be seen that only relevant contingencies 56 (e.g. a potential loss of reactive power in the case of very low wind) are generated by the wind power contingency definition 50 and thus transmitted 72 to the analysis engine 48 for analysis. In turn, this means the overall number of worst contingencies 60 generated, in respect of wind, for implementation in the power grid by can significantly be reduced by simulating only the contingencies that are reasonable given the current operating conditions the plant is currently experiencing.

This selective method for generating contingencies by contingency analysis module 32, by inputting data 62, 64, 55 and 68 detailing the operational characteristics of the wind farms as well as real-time wind measurements or forecasts, results in the refined generation by wind power contingency definition 50 of only those credible contingencies 56 that appear reasonably likely to physically occur. This results in a significant reduction of the number of credible contingencies 56 that will be generated and consequently a reduction of the computational requirements for the contingency analysis by the analysis engine 48. This is of particular value given the large differences which can occur in weather local to different wind farms, more so that in thermal or hydro units, which in turn results in a larger number of contingencies potentially being generated for wind farms. In simple terms, the method detailed with respect to the process system 31 above will not simulate a contingency analysis for a power production increase or decrease for a given wind farm if no wind exists at that particular wind farm.

In a second embodiment of an intermittent energy source contingency analysis module 32 the situation may arise wherein neither wind measurements nor wind forecasts are available for a site where a particular wind farm is located. Should this arise, the power output (measured or forecasted) of that wind unit can be used to derive the operating conditions of the plant illustrated in Figure 4. As with the previous embodiment, the contingency analysis filtering process is based on the operation modes 84a- d. The power measurements or forecast wind power, in combination with the known operational setting of the wind turbines can be used to create a power output estimate/guess depending on which operation mode the turbines are in. This estimate can then be used for the contingency analysis filtering process in wind power contingency definition 50 described above.

Unrealistic contingencies can also be filtered out in the same manner as detailed above. An aim of the contingency analysis process, such as is detailed above, is to determine the influence of larger system variations to the stability of an energy distribution network such as power grid 21. Therefore, it is important that large variations of the active power (P) or the reactive power (Q) are of considered in the inputting of data to the contingency analysis module 32. Furthermore, large variations of P and Q place a greater amount of operational stress on the network, such as power grid 21 of Figure 2, if several meteorological or operational events happen in the same geographical area, e.g. near wind farm 24, at the same time, as it becomes more likely that the electrical network 24a, of power grid 21, near wind farm 24 will become a bottleneck in this geographical area. This bottleneck restricts other usual network operations as the flexibility within the network is reduced, an example of this would be that more power would not be able to be transported via the affected lines.

The Wind Power Contingency Definition 50 is provided with geographical information about the location of the wind farms 22-30 in the power grid 21. This information is configuration data pre-programmed into the system 31 at commissioning for the specific power grid with which it is used. Therefore, when large variations of P and Q are occurring as is detailed above, this geographical information is used by Wind Contingency Definition 50 to group potential contingencies and to simulate them at the same time. The grouping carried out by Wind Contingency Definition 50 will be based on geographical proximity gained from the geographical information pre-programmed into the system 31, and the simulation will take account of the direction of the wind, so that wind farms expecting similar forecasts can be grouped together.

Contingencies which take into account geographical spread of wind farms, in this case farms 22 - 30 which supply power grid 21, are generated taking into account combinations of operating conditions when applied to one of the geographical regions in which one of farms 22 - 30 is located. It will be understood that all contingencies that are transmitted from module 32 are worst case contingencies with the wind contingencies processed by Wind Contingency Definition 50 before being transmitted to form part of the credible contingencies 56 from where they are transmitted on for screening for the most critical contingencies in sorting and classification module 58.

Examples of such combinations of operating conditions are:
1. If more than one unit is in a second operating mode 84b resulting in varying P and Q, the up/down variation, which can be seen in the graphical representation of operating mode 84b, is simulated for all affected wind farms by Wind Contingency Definition 50. It will be understood that a movement up represents an increase in active power P and decrease in reactive power Q whilst a movement down represents a decrease in P and an increase in Q.
2. If more than one unit is in a first operating mode 84a or a fourth operating mode 84d, which can result in a complete loss of P and Q, the outage or disconnection for all units at the same time is simulated.
3. If at least one unit is in a first operating mode 84a and at least one unit is in a second operating mode 84b then for all the units in the first operating mode 84a an outage is simulated in parallel with an increase of P for all units in second operating mode 84b. The simulation by Wind Contingency Definition 50 of such a combination of operating modes 84a and 84b is useful as the result on the reactive power Q is analyzed. For the units in the first operating mode 84a, Q is lost completely while for all the units in the second operating mode 84b, Q can be reduced due to the increase of P.
4. If at least one unit is in the second operation mode 84b and at least one unit is in a fourth operating mode 84d then for all the units in the fourth operating mode 84d an outage is simulated in parallel with a decrease of P for all units in second operating mode 84b. The simulation by Wind Contingency Definition 50 of such a combination of operating modes 84b and 84d is useful as the result on the active power P is analyzed. For the units in the fourth operating mode 84d, P is lost completely while for all the units in second operating mode 84b, P is reduced.

An example of such a contingency case being applied could with respect to power grid 21 having the wind unit operating modes 84a-d specified in Table 2 applying to the wind farms 22-30 and the assumption of geographical mappings of units 24 and 26 to one geographical region and the mapping of units 28 and 30 to one geographical region. In such a situation, the contingency case 4 from the list above would be applied to the units 28 and 30.

It will be understood that the individual wind farms need not be considered as groupings in geographical regions and in which case the processing in the wind contingency definition 50 is based on a global system view whereby all wind units are considered in one geographical region and then the filtering mechanism described above using the four operation modes is applied. In such a circumstance, the four combinations of operating conditions detailed above as 1 - 4 are each able to be applied to all windfarms in the system. This simulates the worst cases of combined active and reactive power changes in the whole system thus assuming the worst effects are happening at the same time as this would place the network under most stress. In a great deal of circumstances, it is reasonable to undertake such a global and system wide generation of contingencies as the same wind conditions can be spread over wider geographical regions and thus appear global to the electrical network operation.

It will be understood that whilst the above examples have been detailed with respect to operating modes 84a - d as shown in Figure 2, the operating modes may be different from those shown. For example, a first transitional operating mode could be located around the previously defined point 85b. The inclusion of such an additional operating mode could be meaningful in order to better model the transition from first operating mode 84a to second operating mode 84b. Consequently, the possible contingencies that are analyzed for first operating mode 84a and second operating mode 84b could be applied to this newly defined first transitional operating region. The same concept can be applied around the points 85c and 85d in the operating region curve defined in Figure 2.

## Claims

1. A contingency analysis method for an energy network (21) which includes at least one intermittent energy source generating plant (22, 24, 26, 28, 30) comprising a wind farm with a wind turbine, the method comprising the steps of:
collecting measurements and status indications from the energy network (21) including power production and wind speed from each of the at least one farms;
analysing the collected measurements and indications and computing a mathematical model which represents the state of the energy network in real time;
generating wind power contingency scenarios representative of an effect of large wind variations based upon the measurements related to wind power plants, expected values of production, expected wind speed, and geographical information about the location of each of the at least one wind farms;
filtering out credible contingencies from the wind power contingency scenarios based on wind power curve information;
incorporating said filtered credible contingencies in a list of credible contingencies (N);
computing a severity index based on the state of the energy network for each of the credible contingencies;
ranking the credible contingencies according to the severity index;
collating credible contingencies having the most severe ranking to form a subset of worst contingencies (n).

2. The method as claimed in claim 1, comprising the steps of
linearly approximating the wind power curve of the wind turbine,
splitting a linear approximation thus obtained into four components (84a, 84b, 84c, 84d), defining four different operation modes (1, 2, 3, 4) so that the components correlate the operation modes,
filtering out credible contingencies based on the operating mode of the wind turbine.

3. The method as claimed in claim 2, wherein a first component (84a) of the linear approximation defines a first operating mode (1, 2, 3, 4) which occurs when a wind speed is below a cut-in speed.

4. The method as claimed in claim 3, wherein a second component (84b) of the linear approximation defines a second operating mode (2) which occurs when the wind speed is between the cut-in speed and a minimum wind speed at which the turbine produces a rated active power.

5. The method as claimed in claim 4, comprising the steps of
filtering out an activate wind unit outage contingency;
generating an activate production increase contingency; and
generating an activate production decrease contingency for a wind turbine in the second (2) operating mode.

6. The method as claimed in one of claims 3 to 5, wherein a third component (84c) of the linear approximation defines a third operating mode (3) which occurs when the wind speed is at a level for the wind turbine to consistently produce rated active power, preferably between 13m/s and 24m/s.

7. The method as claimed in claim 6, comprising the step of
filtering out an activate wind unit outage contingency;
filtering out an activate production increase contingency; and
filtering out an activate production decrease contingency for a wind turbine in the third (3) operating mode.

8. The method as claimed in one of claims 3 to 7, wherein a fourth component (84d) of the linear approximation defines a fourth operating mode (4) which occurs when the wind speed is above a cut-out speed for the wind turbine.

9. The method as claimed in one of claims 3 to 8, comprising the step of
activating an activate wind unit outage contingency;
filtering out an activate production increase contingency; and
filtering out an activate production decrease contingency for a wind turbine in the first or fourth operating mode (4).

10. The method as claimed in any one of the preceding claims, further comprising the step of using a measured or forecast power output of the wind farm to derive the operating mode (1, 2, 3, 4) of the wind turbine.

11. The method as claimed in one of claims 4 to 10, wherein a transitional operating mode is introduced to model a transition from the first operating mode (1) to the second operating mode (2), from the second operating mode (2) to the third operating mode (3), or from the third operating mode (3) to the fourth operating mode (4).

12. The method as claimed in claim 10, wherein when filtering out credible contingencies only relevant contingencies are generated (56).

## Patentansprüche

1. Kontingenzanalyseverfahren für ein Energienetz (21), das wenigstens eine intermittierende Energiequellen-Erzeugungsanlage (22, 24, 26, 28, 30) enthält, die einen Windenergiepark mit einer Windturbine umfasst, wobei das Verfahren die folgenden Schritte umfasst:
Sammeln von Messungen und Statusangaben von dem Energienetz (21) einschließlich Leistungsproduktion und Windgeschwindigkeit von jedem des wenigstens einen Parks;
Analysieren der gesammelten Messungen und Angaben und Berechnen eines mathematischen Modells, das den Zustand des Energienetzes repräsentiert, in Echtzeit;
Erzeugen von Windenergiekontingenzszenarien, die eine Wirkung großer Windschwankungen repräsentieren, anhand der Messungen in Bezug auf die Windkraftwerke, erwartete Produktionswerte, erwartete Windgeschwindigkeit und geographische Informationen über den Ort jedes des wenigstens einen Windenergieparks;
Ausfiltern belastbarer Kontingenzen aus den Windenergiekontingenzszenarien anhand von Windenergiekurveninformationen;
Aufnehmen der gefilterten belastbaren Kontingenzen in eine Liste belastbarer Kontingenzen (N);
Berechnen eines Stärkeindexes anhand des Zustands des Energienetzes für jede der belastbaren Kontingenzen;
Einordnen der belastbaren Kontingenzen in eine Rangordnung in Übereinstimmung mit dem Stärkeindex;
Abgleichen belastbarer Kontingenzen mit dem stärksten Rang, um eine Untermenge schlechtester Kontingenzen (n) zu bilden.

2. Verfahren nach Anspruch 1, das die folgenden Schritte umfasst:
lineares Approximieren der Windenergiekurve der Windturbine,
Aufteilen einer so erhaltenen linearen Approximation in vier Komponenten (84a, 84b, 84c, 84d),
Definieren von vier verschiedenen Betriebsarten (1, 2, 3, 4), so dass die Komponenten mit den Betriebsarten korrelieren,
Ausfiltern belastbarer Kontingenzen anhand der Betriebsart der Windturbine.

3. Verfahren nach Anspruch 2, wobei die erste Komponente (84a) der linearen Approximation eine erste Betriebsart (1) definiert, die auftritt, wenn eine Windgeschwindigkeit unter einer Einschaltgeschwindigkeit liegt.

4. Verfahren nach Anspruch 3, wobei die zweite Komponente (84b) der linearen Approximation eine zweite Betriebsart (2) definiert, die auftritt, wenn die Windgeschwindigkeit zwischen der Einschaltgeschwindigkeit und einer minimalen Windgeschwindigkeit, bei der die Turbine eine aktive Nennleistung erzeugt, liegt.

5. Verfahren nach Anspruch 4, das die folgenden Schritte umfasst:
Ausfiltern einer aktiven Windeinheit-Ausfallkontingenz;
Erzeugen einer aktiven Produktionszunahme-Kontingenz; und
Erzeugen einer aktiven Produktionsabnahme-Kontingenz
für eine Windturbine in der zweiten Betriebsart (2).

6. Verfahren nach einem der Ansprüche 3 bis 5, wobei eine dritte Komponente (84c) der linearen Approximation eine dritte Betriebsart (3) definiert, die auftritt, wenn die Windgeschwindigkeit ein Niveau hat, bei dem die Windturbine konsistent eine aktive Nennleistung erzeugt, vorzugsweise im Bereich von 13 m/s bis 24 m/s.

7. Verfahren nach Anspruch 6, das den folgenden Schritt umfasst:
Ausfiltern einer aktiven Windeinheit-Ausfallkontingenz;
Ausfiltern einer aktiven Produktionszunahme-Kontingenz; und
Ausfiltern einer aktiven Produktionsabnahme-Kontingenz
für eine Windturbine in der dritten Betriebsart (3).

8. Verfahren nach einem der Ansprüche 3 bis 7, wobei eine vierte Komponente (84d) der linearen Approximation eine vierte Betriebsart (4) definiert, die auftritt, wenn die Windgeschwindigkeit oberhalb einer Abschaltgeschwindigkeit für die Windturbine liegt.

9. Verfahren nach einem der Ansprüche 3 bis 8, das den folgenden Schritt umfasst:
Aktivieren einer aktiven Windeinheit-Ausfallkontingenz;
Ausfiltern einer aktiven Produktionszunahme-Kontingenz; und
Ausfiltern einer aktiven Produktionsabnahme-Kontingenz
für eine Windturbine in der ersten oder der vierten Betriebsart (4).

10. Verfahren nach einem der vorhergehenden Ansprüche, das ferner den Schritt des Verwendens einer gemessenen oder vorhergesagten Energieabgabe des Windenergieparks umfasst, um die Betriebsart (1, 2, 3, 4) der Windturbine abzuleiten.

11. Verfahren nach einem der Ansprüche 4 bis 10, wobei eine Übergangsbetriebsart eingeführt wird, um einen Übergang von der ersten Betriebsart (1) in die zweite Betriebsart (2), von der zweiten Betriebsart (2) in die dritte Betriebsart (3) oder von der dritten Betriebsart (3) in die vierte Betriebsart (4) zu modellieren.

12. Verfahren nach Anspruch 10, wobei dann, wenn belastbare Kontingenzen ausgefiltert werden, nur relevante Kontingenzen erzeugt werden (56).

## Revendications

1. Procédé d'analyse de contingences pour un réseau d'énergie (21) comportant au moins une centrale génératrice à sources d'énergie intermittentes (22, 24, 26, 28, 30) comprenant un parc éolien avec une turbine éolienne, le procédé comprenant les étapes consistant à :
collecter des mesures et des indications de statut à partir du réseau d'énergie (21), notamment une production d'énergie et une vitesse du vent à partir du ou de chaque parc ;
analyser les mesures et les indications collectées et calculer un modèle mathématique représentant l'état du réseau d'énergie en temps réel ;
générer des scénarios de contingences d'énergie éolienne représentant un effet de fortes variations du vent sur la base des mesures liées à des centrales éoliennes, des valeurs de production escomptées, une vitesse du vent escomptée et des informations géographiques concernant l'emplacement du ou de chaque parc éolien ;
filtrer, parmi des scénarios de contingence d'énergie éolienne, des contingences crédibles sur la base d'informations relatives à une courbe de puissance éolienne ;
incorporer lesdites contingences crédibles filtrées dans une liste de contingences crédibles (N) ;
calculer un indice de gravité sur la base de l'état du réseau d'énergie pour chacune des contingences crédibles ;
classer les contingences crédibles en fonction de l'indice de gravité ;
regrouper les contingences crédibles classées comme les plus graves pour former un sous-ensemble de contingences les plus défavorables (n).

2. Procédé selon la revendication 1, comprenant les étapes consistant à :
effectuer une approximation linéaire de la courbe de puissance éolienne de la turbine éolienne,
décomposer une approximation linéaire ainsi obtenue en quatre composantes (84a, 84b, 84c, 84d),
définir quatre modes de fonctionnement différents (1, 2, 3, 4) de manière à corréler les composantes aux modes de fonctionnement,
filtrer des contingences crédibles sur la base du mode de fonctionnement de la turbine éolienne.

3. Procédé selon la revendication 2, dans lequel une première composante (84a) de l'approximation linéaire définit un premier mode de fonctionnement (1) survenant lorsqu'une vitesse du vent est inférieure à une vitesse de démarrage.

4. Procédé selon la revendication 3, dans lequel une deuxième composante (84b) de l'approximation linéaire définit un deuxième mode de fonctionnement (2) survenant lorsque la vitesse du vent s'inscrit entre la vitesse de démarrage et une vitesse minimale du vent à laquelle la turbine produit une puissance active nominale.

5. Procédé selon la revendication 4, comprenant les étapes consistant à :
filtrer un déclenchement de contingence sur panne d'unité éolienne ;
générer un déclenchement de contingence sur hausse de production ; et
générer un déclenchement de contingence sur baisse de production
pour une turbine éolienne dans le deuxième mode de fonctionnement (2).

6. Procédé selon l'une des revendications 3 à 5, dans lequel la troisième composante (84c) de l'approximation linéaire définit un troisième mode de fonctionnement (3) survenant lorsque la vitesse du vent est à un niveau permettant à la turbine éolienne de produire de façon constante une puissance active nominale, de préférence entre 13 m/s et 24 m/s.

7. Procédé selon la revendication 6, comprenant les étapes consistant à :
filtrer un déclenchement de contingence sur panne d'unité éolienne ;
filtrer un déclenchement de contingence sur hausse de production ; et
filtrer un déclenchement de contingence sur baisse de production
pour une turbine éolienne dans le troisième mode de fonctionnement (3).

8. Procédé selon l'une des revendications 3 à 7, dans lequel une quatrième composante (84d) de l'approximation linéaire définit un quatrième mode de fonctionnement (4) survenant lorsque la vitesse du vent est supérieure à une vitesse de coupure pour la turbine éolienne.

9. Procédé selon l'une des revendications 3 à 8, comprenant les étapes consistant à :
activer un déclenchement de contingence sur panne d'unité éolienne ;
filtrer un déclenchement de contingence sur hausse de production ; et
filtrer un déclenchement de contingence sur baisse de production
pour une turbine éolienne dans le premier ou le quatrième mode de fonctionnement (4).

10. Procédé selon l'une quelconque des revendications précédentes, comprenant en outre l'étape consistant à utiliser une puissance de sortie mesurée ou projetée du parc éolien pour déduire le mode de fonctionnement (1, 2, 3, 4) de la turbine éolienne.

11. Procédé selon l'une des revendications 4 à 10, dans lequel un mode de fonctionnement transitoire est introduit pour modéliser une transition entre le premier mode de fonctionnement (1) et le deuxième mode de fonctionnement (2), entre le deuxième mode de fonctionnement (2) et le troisième mode de fonctionnement (3) ou entre le troisième mode de fonctionnement (3) et le quatrième mode de fonctionnement (4).

12. Procédé selon la revendication 10, dans lequel, lors de l'étape consistant à filtrer des contingences crédibles, seules des contingences pertinentes sont générées (56).
